# EUROPÄISCHE PATENTSCHRIFT

(11) **EP 4 306 727 B1**
(45) Veröffentlichungstag und Bekanntmachung des Hinweises auf die Patenterteilung: **16.09.2026**
(21) Anmeldenummer: 22185227.0
(22) Anmeldetag: 15.07.2022
(51) Int. Cl.: E03B 9/02, B25B 13/00, B25G 1/04, E03B 9/04, E03B 9/06, F16K 31/46

(54) **HYDRANTENGESTÄNGE, HYDRANT SOWIE EIN VERFAHREN ZUR LÄNGENEINSTELLUNG EINES HYDRANTENGESTÄNGES**
HYDRANT ROD, HYDRANT, AND A METHOD FOR ADJUSTING THE LENGTH OF A HYDRANT ROD
TRINGLES DE BOUCHE D'INCENDIE, BOUCHE D'INCENDIE, AINSI QUE PROCÉDÉ DE RÉGLAGE DE LA LONGUEUR DES TRINGLES DE BOUCHE D'INCENDIE

(43) Veröffentlichungstag der Anmeldung: 17.01.2024
(73) Patentinhaber: Düker GmbH, 97753 Karlstadt (DE)
(72) Erfinder: Greim, Timo, 63846 Laufach (DE); Zöller, Jochen, 63939 Wörth a. Main (DE)
(74) Vertreter: Ullrich & Naumann PartG mbB

(56) Entgegenhaltungen:
- CH-A2- 709 457
- DE-A1- 102019 121 314
- DE-C1- 19 703 379
- DE-C1- 19 808 195
- DE-U1- 202012 100 543
- DE-U1- 202018 105 295
- DE-U1- 29 516 158

## Beschreibung

Die Erfindung betrifft ein Hydrantengestänge zur Betätigung der Dichteinrichtung eines Hydranten.

Des Weiteren betrifft die Erfindung einen Hydranten sowie ein Verfahren zur Längeneinstellung eines Hydrantengestänges.

Hydranten sind seit Jahren aus der Praxis bekannt, beispielsweise als Überflurhydrant und als Unterflurhydrant, und dienen zur Entnahme von Wasser, insbesondere von Löschwasser. Siehe zum Beispiel das Dokument DE 20 2018 105 295 U1. Ein Hydrant weist üblicherweise eine Steigleitung auf, die mit einer Wasserleitung verbunden ist. Um Wasser aus dem Hydranten zu entnehmen, kann über ein Hydrantengestänge eine Dichteinrichtung geöffnet werden, die an dem der Wasserleitung zugewandten Ende des Steigrohres angeordnet ist. Hierzu ist an dem der Dichteinrichtung gegenüberliegenden Ende des Hydrantengestänges eine Betätigungseinrichtung angeordnet, die das Hydrantengestänge und somit die Dichteinrichtung betätigt, beispielsweise ein Kugelventil anhebt und somit öffnet.

Bei den aus der Praxis bekannten Hydrantengestängen ist problematisch, dass diese auf eine vorgegebene Länge ausgelegt sind. Somit lassen sich diese Gestänge nicht an unterschiedliche Einbautiefen bzw. unterschiedlich lang ausgebildete Hydranten anpassen, so dass ein universeller Einsatz nicht möglich ist.

Der vorliegenden Erfindung liegt daher die Aufgabe zugrunde, ein Hydrantengestänge der eingangs genannten Art derart auszugestalten und weiterzubilden, dass ein Einsatz bei Hydranten unterschiedlicher Länge ermöglicht ist. Des Weiteren soll ein Hydrant mit einem verbesserten Hydrantengestänge angegeben werden. Weiterhin soll ein Verfahren zur Längenanpassung eines Hydrantengestänges angegeben werden.

Erfindungsgemäß wird die voranstehende Aufgabe betreffend das Hydrantengestänge durch die Merkmale des Anspruches 1 gelöst. Damit ist ein Hydrantengestänge zur Betätigung der Dichteinrichtung eines Hydranten beansprucht, mit einem Rohr und einer teilweise in dem Rohr angeordneten und gegenüber dem Rohr verschiebbaren Stange, wobei eine Arretiereinrichtung angeordnet ist, über welche die Stange form- und/oder kraftschlüssig gegenüber dem Rohr in einer gewünschten Position festlegbar ist.

In erfindungsgemäßer Weise ist erkannt worden, dass die zugrundeliegende Aufgabe in verblüffend einfacher Weise gelöst werden kann, indem eine in einem Rohr verschiebbar angeordnete Stange vorgesehen ist. Durch diese Konstruktion ist das Hydrantengestänge teleskopierbar und dadurch auf die gewünschte Länge einstellbar. In weiter erfindungsgemäßer Weise ist eine Arretiereinrichtung angeordnet, die es ermöglicht, die Stange form- und/oder kraftschlüssig gegenüber dem Rohr in der gewünschten Position festzulegen.

Der Begriff "Stange" ist im Rahmen der vorliegenden Offenbarung im weitersten Sinne zu verstehen. Hierbei kann es sich um ein massives Bauteil entsprechend einem Stab oder beispielsweise auch um ein Rohr handeln. Wesentlich ist dabei, dass die "Stange" ausreichend stabil ausgebildet ist, um die Dichteinrichtung betätigen zu können. Gemäß einer vorteilhaften Ausgestaltung weist die Stange zumindest teilweise ein Außengewinde auf. Im Konkreten ist denkbar, dass die Stange als Gewindestange ausgebildet ist.

Erfindungsgemäß weist die Arretiereinrichtung eine Hülse und ein oder mehrere Druckelemente auf, wobei das mindestens eine Druckelement in einer Ausnehmung des Rohres angeordnet ist und von der Hülse umgeben ist. Wenn sich die Hülse in einem arretierten Zustand befindet, kann diese das Druckelement in radialer Richtung auf die Stange drücken, so dass eine sichere Verbindung realisiert ist. Dabei ist es denkbar, dass mindestens zwei Druckelement vorgesehen sind, die vorzugsweise symmetrisch um die Stange herum angeordnet sind. Durch diese konstruktive Maßnahme ist eine nahezu spielfreie Verstellung der Auslängung und gleichzeitig eine besonders feste Verbindung mit der Stange erzielbar.

Die Stange, das Rohr und die Arretiereinrichtung können bei einer solchen Konstruktion somit koaxial zueinander angeordnet sein, wobei die Hülse der Arretiereinrichtung das Rohr bzw. die Stange zumindest im Wesentlichen umschließt.

Auch erfindungsgemäß ist die Hülse in einem nicht-arretierten Zustand in Längsrichtung gegenüber dem Rohr bewegbar.

Dadurch ist es möglich, die Hülse derart zu verschieben, dass das mindestens eine Druckelement nicht gegen die Stange gedrückt wird, so dass eine Verschiebung der Stange gegenüber dem Rohr und somit eine Längenverstellung bzw. Auslängung des Hydrantengestänges möglich ist. Im Konkreten ist es hierbei denkbar und von Vorteil, dass die Hülse in einem ersten Bereich einen ersten Innendurchmesser aufweist, der ausreichend groß ist, dass das mindestens eine Druckelement nicht mit der Stange in Eingriff gebracht ist, so dass die Stange gegenüber dem Rohr verschiebbar ist. Alternativ oder zusätzlich kann vorgesehen sein, dass die Hülse in einem zweiten Bereich einen zweiten Innendurchmesser aufweist, so dass das mindestens eine Druckelement gegen die Stange gedrückt wird, um die Stange mit dem Rohr zu arretieren.

In besonders vorteilhafter Weise kann in einem zwischen einem ersten Bereich und einem zweiten Bereich ausgebildeten Übergangsbereich der Innendurchmesser in Längsrichtung der Hülse gesehen, vorzugsweise linear, von einem ersten Innendurchmesser bis zu einem zweiten Innendurchmesser abnehmen. Dadurch ist es möglich, den auf das Druckelement ausgeübten Anpressdruck bei einer Verschiebung der Hülse kontinuierlich zu erhöhen bzw. zu verringern. Alternativ oder zusätzlich ist es denkbar, dass sich ein Außendurchmesser des mindestens einen Druckelements zu einem freien Ende hin verjüngt wodurch sich ebenfalls die Anpassung des ausgeübten Drucks kontinuierlich verändern lässt. Gemäß einer besonders vorteilhaften Ausgestaltung weisen der Innendurchmesser des Übergangsbereichs der Hülse und der Außendurchmesser im Bereich des freien Endes des Druckelements einen komplementären Verlauf auf, so dass ein besonders leichtgängiges Schließen und Öffnen der Verbindung durch die Verschiebung der Hülse ermöglicht ist.

In Weiter vorteilhafter Weise kann das mindestens eine Druckelement als Rohrsegment ausgebildet sein. Dies hat den Vorteil, dass das Rohrsegment derart ausgestalten werden kann, dass es zumindest im Wesentlichen der Geometrie der Ausnehmung im Rohr entspricht, in dem es angeordnet ist. Alternativ oder zusätzlich kann an einer der Stange zugewandten Fläche des mindestens einen Druckelements wenigstens ein Gewindesegment angeordnet sein, das komplementär zu einem Außengewinde der Stange ausgebildet ist. Eine solche Konstruktion hat den Vorteil, dass das Gewindesegment im Arretierten Zustand in das Außengewinde der Stange eingreift, so dass ein Formschluss geschaffen ist.

Um die Bewegung der Hülse gegenüber dem Rohr zu begrenzen und somit ein Verlieren des mindestens einen Druckelements zu verhindern, kann ein Sicherheitselement an der Hülse ausgebildet bzw. angeordnet sein. Dieses kann radial in eine längliche Öffnung bzw. ein Langloch des Rohres eingreifen. Das Sicherheitselement könnte im Konkreten als Schraube, insbesondere als Madenschraube, als Bolzen oder als beliebiges anderes durch die längliche Öffnung reichendes Element ausgebildet sein. Eine Schraube hat den Vorteil, dass diese in die Wandung der Hülse eingeschraubt werden könnte, so dass das Sicherheitselement einfach und sicher zu befestigen ist. Des Weiteren wird die Montage und Demontage der gesamten Vorrichtung durch eine solche Konstruktion erheblich vereinfacht.

Zur formschlüssigen Verbindung der Hülse an dem Rohr kann ein Arretierelement an der Hülse ausgebildet bzw. angeordnet sein, das in einer Arretierposition der Hülse in eine Öffnung des Rohres eingreift. Das Arretierelement kann beispielsweise als Bolzen realisiert sein, der über einen Handgriff in radialer Richtung bewegbar ist, so dass die formschlüssige Verbindung zwischen Hülse und Rohr auf einfache Weise hergestellt bzw. gelöst werden kann.

In weiter vorteilhafter Weise kann an einem freien Ende des Rohres eine Dichteinrichtung angeordnet sein. Zwischen der Dichteinrichtung und dem Rohr können auch weitere Elemente bzw. Bauteile angeordnet sein. Wesentlich ist dabei, dass durch eine Bewegung des Rohres eine Bewegung bzw. Betätigung der Dichteinrichtung möglich ist. Zu Betätigung der Dichteinrichtung kann an einem freien Ende der Stange eine Betätigungseinrichtung angeordnet ist, wobei auch diese nicht unmittelbar mit der Stang verbunden sein muss, sondern auch weitere Bauteile zwischen Stange und Betätigungseinrichtung angeordnet sein können.

In Bezug auf den Hydranten wird die zugrundeliegende Aufgabe durch die Merkmale von Anspruch 12 gelöst. Damit ist ein Hydrant, insbesondere ein höhenverstellbarer Hydrant beansprucht, mit einem erfindungsgemäßen Hydrantengestänge.

In Bezug auf das Verfahren wird die voranstehende Aufgabe durch die Merkmale von Anspruch 13 gelöst. Damit ist ein Verfahren zur Längeneinstellung eines Hydrantengestänges, insbesondere eines Hydrantengestänges nach einem der Ansprüche 1 bis 11, wobei ein Rohr und eine teilweise in dem Rohr angeordnete Stange derart gegeneinander verschoben werden, dass das Hydrantengestänge die notwendige Länge aufweist, und die Stange gegenüber dem Rohr mit einer Arretiereinrichtung form- und/oder kraftschlüssig festgelegt wird.

Es wird darauf hingewiesen, dass das erfindungsgemäße Hydrantengestänge und der erfindungsgemäße Hydrant jeweils Merkmale aufweisen, die eine verfahrensmäßige Ausprägung aufweisen. Diese Merkmale und die damit erzielten Vorteile können ausdrücklich Teil des erfindungsgemäßen Verfahrens sein.

Es gibt nun verschiedene Möglichkeiten, die Lehre der vorliegenden Erfindung in vorteilhafter Weise auszugestalten und weiterzubilden. Dazu ist einerseits auf die den Hauptansprüchen nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

In der Zeichnung zeigen
- Fig. 1: in einer schematischen Darstellung ein Ausführungsbeispiel eines Hydrantengestänges,
- Fig. 2a, 2b: in einer schematischen, geschnittenen Darstellung das Hydrantengestänge gemäß Fig. 1 in einem arretierten Zustand (Fig. 2a) und in einem nicht-arretierten Zustand (Fig. 2b),
- Fig. 3a, 3b: in einer schematischen Darstellung zwei Ansichten einer Hülse des Hydrantengestänge gemäß Fig. 1,
- Fig. 4a, 4b: in einer schematischen Darstellung zwei Ansichten eines Druckelements des Hydrantengestänge gemäß Fig. 1,
- Fig. 5a, 5b: in einer schematischen Darstellung zwei Ansichten eines Rohres des Hydrantengestänge gemäß Fig. 1,
- Fig. 6: in einer schematischen Darstellung einen Hydranten,
- Fig. 7: in einer schematischen Seitenansicht das Unterteil ähnlich Fig. 6 mit maximal eingeschobenem Steigrohr,
- Fig. 8: in einer schematischen Seitenansicht entsprechend Fig. 7 mit maximal ausgezogenem Steigrohr,
- Fig. 9: in einer schematischen Darstellung eine Teilansicht des Steigrohrs ähnlich Fig. 8 mit beiderseits eines gewindefreien Bereichs angeordneten Gewindebereichen,
- Fig. 10: in einer schematischen Darstellung eine um 90° gedrehte Seitenansicht des Steigrohrs mit einem Blick auf einen Gewindebereich, und
- Fig. 11: in einer schematischen Darstellung einen Schnitt längs Linie 6-6 in Fig. 9 durch das Steigrohr.

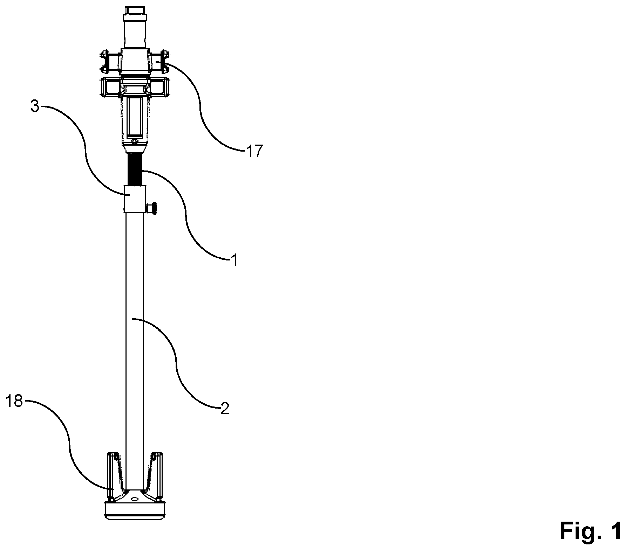

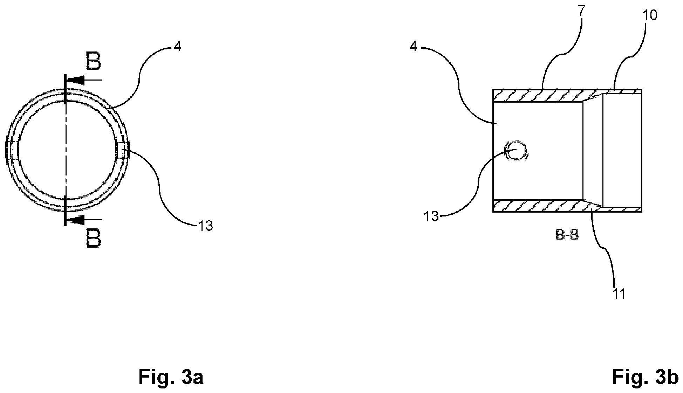

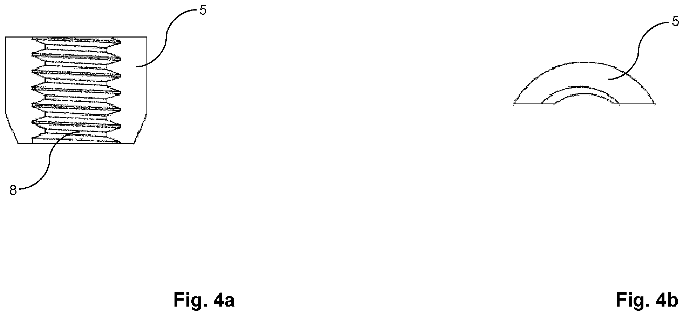

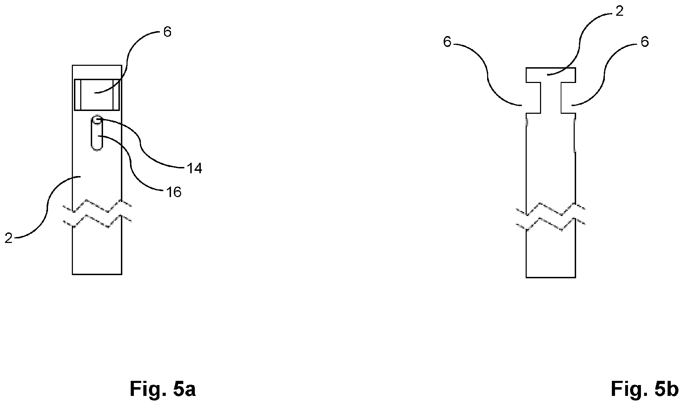

Die Figuren 1 bis 5b zeigen ein Ausführungsbeispiel eines erfindungsgemäßen Hydrantengestänges. Dieses weist eine Stange 1 auf, die in einem Rohr 2 angeordnet ist, wobei Stange 1 und Rohr 2 gegeneinander verschiebbar bzw. teleskopierbar sind, um die Länge des Hydrantengestänges einzustellen. Des Weiteren ist eine Arretiereinrichtung 3 angeordnet, über welche die Stange 1 gegenüber dem Rohr 2 form- und/oder kraftschlüssig in einer gewünschten Position festlegbar ist. An dem freien Ende der Stange 1 ist eine Betätigungseinrichtung 17 angeordnet und an dem freien Ende des Rohres 2 ist eine Dichtungseinrichtung 18 vorgesehen, so dass über das Gestänge die Dichteinrichtung 18 geöffnet bzw. geschlossen werden kann.

Die Arretiereinrichtung 3 weist eine Hülse 4 und zwei Druckelemente 5 auf. Die Druckelemente 5 sind in Ausnehmungen 6 des Rohres 2 eingesetzt und von der Hülse 4 umschlossen. Somit sind die Stange 1, das Rohr 2 und die Hülse 4 koaxial zueinander angeordnet.

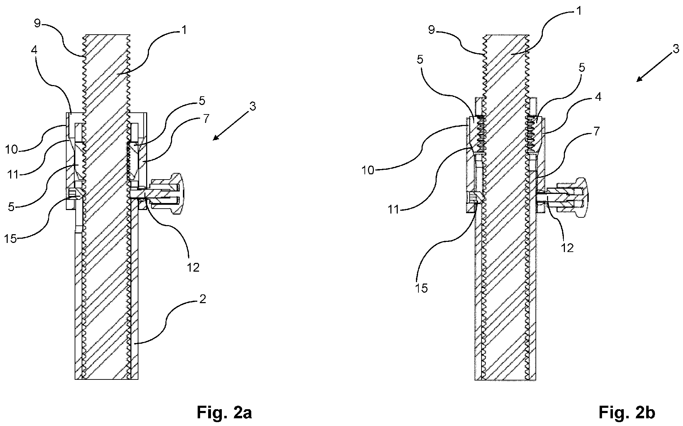

Insbesondere aus Fig. 2a ist deutlich zu erkennen, dass die Druckelemente 5 im arretierten Zustand der Arretiereinrichtung 3 auf Höhe des geringeren zweiten Innendurchmessers im zweiten Bereich 7 der Hülse 4 radial nach Innen auf die Stange 1 gedrückt werden. Dabei greifen die Gewindesegmente 8 der Druckelemente 5 in das Außengewinde 9 der Stange 1 ein, so dass eine formschlüssige Verbindung geschaffen ist.

Des Weiteren ist in Fig. 2b dargestellt, dass zur Erzeugung des nicht-arretierten Zustands die Hülse 4 entlang des Rohres 2 verschoben wird, so dass die Druckelemente 5 auf Höhe des ersten Bereichs 10 liegen, in dem der erste Innendurchmesser ausreichen groß ist, dass die Druckelemente 5 nicht mit der Stange 1 in Eingriff gebracht sind. Somit lassen sich Stange 1 und Rohr 2 im nicht-arretierten Zustand der Arretiereinrichtung gegeneinander verschieben.

In dem Übergangsbereich 11 der Hülse 4 nimmt der Innendurchmesser linear zu, wobei sich der Außendurchmesser der Druckelemente 5 zu einem freien Ende hin linear verjüngt. Somit sind die bei einer Arretierung bzw. Entarretierung aufeinander gleitenden Flächen von Hülse 4 und Druckelementen 5 komplementär zueinander ausgebildet, so dass die Verschiebung einfach durchzuführen ist. Dabei müssen der Außendurchmesser der Druckelemente 5 und der Innendurchmesser der Hülse 4 nicht zwangsweise linear verlaufen, sondern kann auch eine andere Geometrie gewählt werden. Im entarretierten Zustand werden die Druckelemente 5 durch eine Bewegung der Stange 1 radial nach außen geschoben, so dass die formschlüssige Verbindung zwischen den Gewindesegmenten 8 und dem Außengewinde 9 aufgehoben ist.

Im in Fig. 2a gezeigten arretierten Zustand greift ein als Stift ausgebildetes Arretierelement 12 durch eine Öffnung 13 in der Hülse 4 und eine Öffnung 14 des Rohres 2, so dass die Hülse 4 gegenüber dem Rohr 1 nicht bewegbar ist. Zum Entarretieren wird das Arretierelement 12 aus der Öffnung 14 des Rohres 2 herausgezogen.

Des Weiteren ist ein in diesem Ausführungsbeispiel als Madenschraube ausgebildetes Sicherheitselement 15 an der Hülse 4 angeordnet, das in eine längliche Öffnung 16 des Rohres 2 eingreift. Dadurch ist die Positionierung der Hülse 4 auf einen definierten Bereich beschränkt, so dass die Druckelemente 5 stets von der Hülse 4 in den Ausnehmungen 6 gehalten werden.

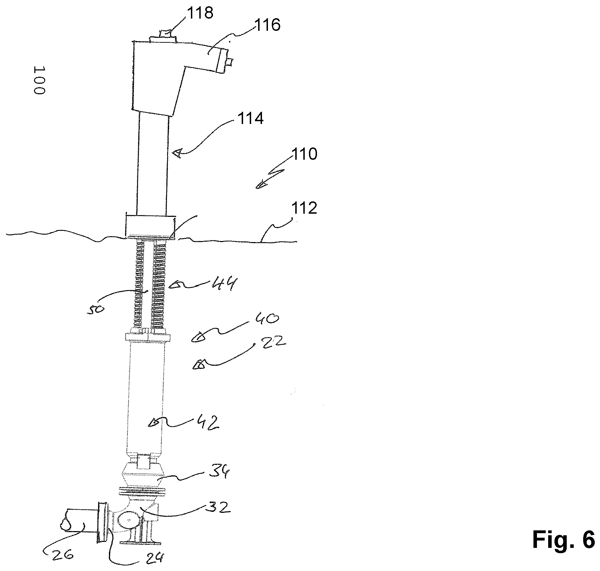

Ein Ausführungsbeispiel eines erfindungsgemäßen Hydranten 100 mit einem nicht dargestellten Hydrantengestänge, ist in Fig. 6 gezeigt. Dieser umfasst ein sich über einer Bodenfläche 112, welche eine Erdoberfläche oder Straßenoberfläche sein kann, erhebendes Oberteil 114 des Hydranten 100, welches mit beispielsweise einem Anschluss 116 versehen ist und außerdem mit einer Betätigung 118 für ein zeichnerisch nicht dargestelltes Hauptanschlussventil.

Unterhalb der Bodenfläche 112 ist ein Unterteil 22 des Hydranten 100 angeordnet, welches einen Anschluss 24 aufweist, der mit einem Zulaufrohr 26 verbunden ist und einen sich an den Anschluss 24 folgenden Bogenkörper 32, welcher zu einem Ventilgehäuse 34 des Hauptabschlussventils führt.

Auf das Ventilgehäuse 34 folgt eine Steigrohranordnung 40, umfassend einen Steigrohrmantel 42, welcher ein Steigrohr 44 aufnimmt, welches höhenverstellbar aus dem Steigrohrmantel 42 ausziehbar ist und einen Montageflansch 46 aufweist, auf welchem das Oberteil 114 montiert ist.

Das Steigrohr 44 ist dabei variabel höhenverstellbar relativ zum Steigrohrmantel 42 ausgebildet, um den Montageflansch 46 möglichst genau in Höhe der Bodenfläche 112 positionieren zu können, so dass ein Verlauf des Zulaufrohrs 26 in unterschiedlicher Tiefe relativ zur Bodenfläche ausgeglichen werden kann.

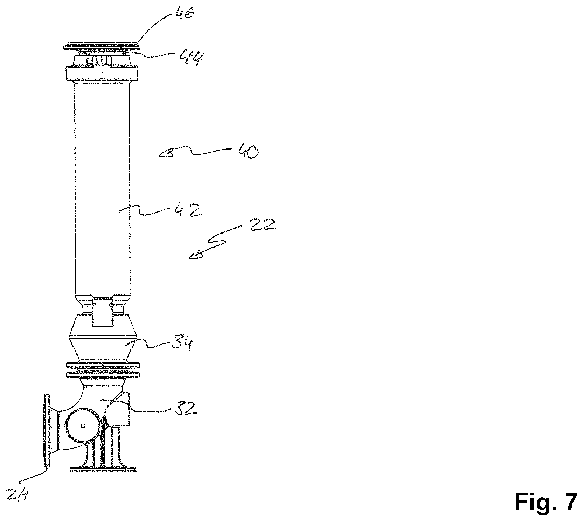

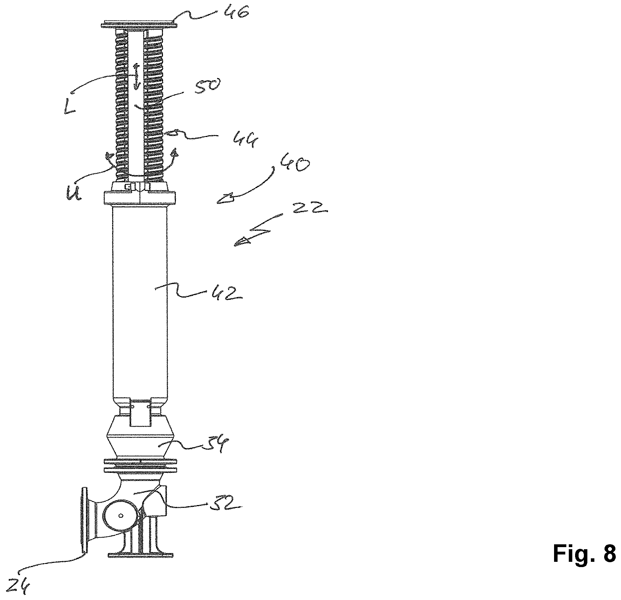

So ist, wie in Fig. 7 dargestellt, das Steigrohr 44 im Wesentlichen vollständig in den Steigrohrmantel 42 einschiebbar oder, wie in Fig. 8 dargestellt, maximal aus dem Steigrohrmantel 42 ausziehbar, wobei sich aus der unterschiedlichen Lage des Montageflansches 46 über dem Anschluss 24 einmal in der maximal eingeschobenen Stellung gemäß Fig. 7 und einmal in der maximal ausgezogenen Stellung in Fig. 8 die realisierbare Höhenvariabilität der Steigrohranordnung 40 ergibt.

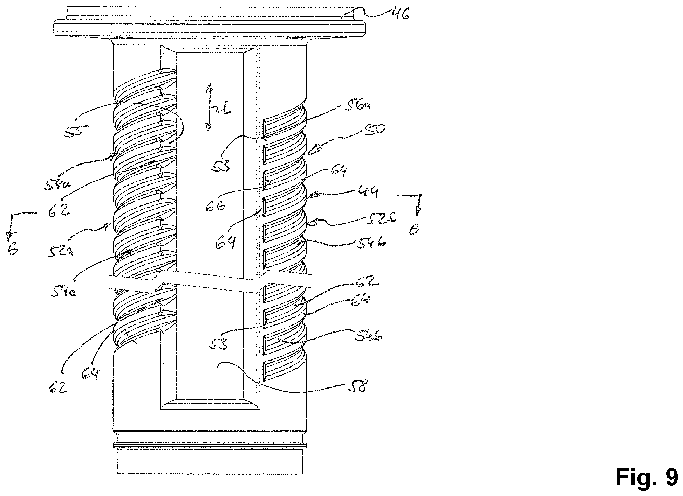

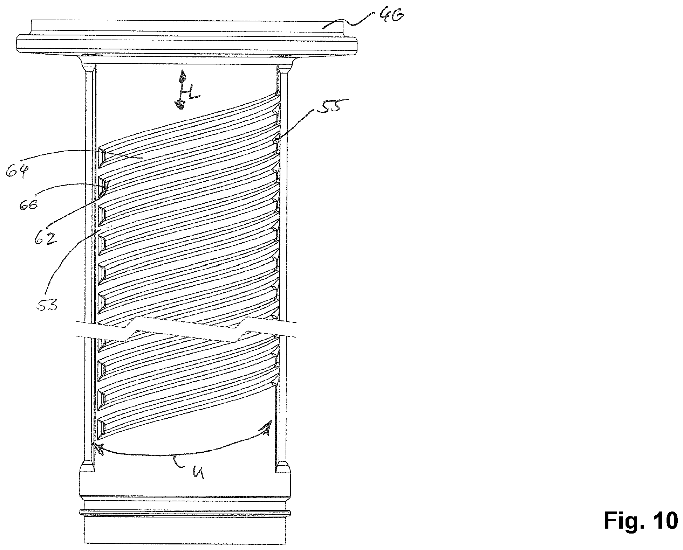

Zur Fixierung des Steigrohrs 44 relativ zum Steigrohrmantel 42 ist das Steigrohr 44, wie in Fig. 9, 10 und 11 dargestellt, auf einander gegenüberliegenden Außenumfangsseiten 50 mit Gewindebereichen 52a und 52b versehen, die keine um die Außenumfangsseite 50 umlaufenden Gewindegänge sondern Gewindegangsegmente 54 aufweisen.

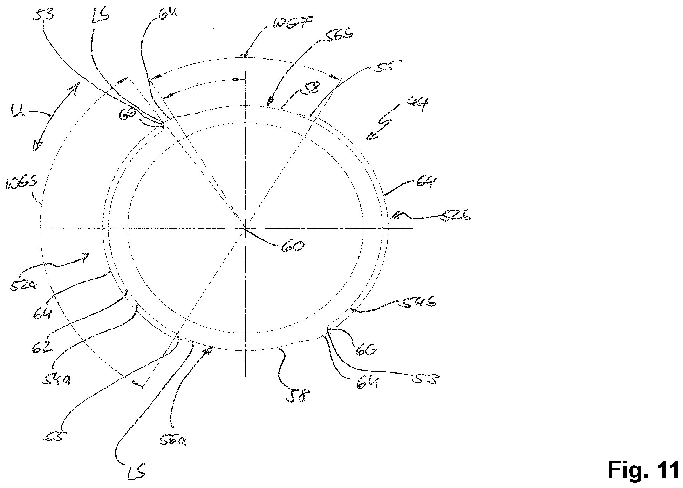

Die Gewindebereiche 52a, b erstrecken sich streifenförmig in der Längsrichtung L des Steigrohrs 44, insbesondere über dessen ganze Erstreckung in der Längsrichtung L, im maximal ausgezogenen Zustand gemäß Fig. 8 von dem Steigrohrmantel 42 bis zu dem Montageflansch 46 und haben in Umfangsrichtung U des Steigrohrs 44 eine Ausdehnung zwischen sich in der Längsrichtung L erstreckenden Längsseiten LS über einen Winkelbereich WGS (Fig. 11).

Zwischen den Gewindebereichen 52a, b liegen in Umfangsrichtung gesehen streifenförmig sich ebenfalls in der Längsrichtung L des Steigrohrs 44 erstreckende, und ebenfalls an der Außenumfangsseite 50 angeordnete gewindefreie Bereiche 56a, b in denen, wie in Fig. 11 dargestellt, eine Außenfläche 58 des Steigrohrs 44 in einem radialen Abstand von einer Mittelachse 60 desselben verläuft, der ungefähr einem radialen Abstand einer Grundfläche 62 der Gewindegänge 54 in den Gewindebereichen 52a, 52b entspricht, wobei die Gewindebereiche 52a, b zwischen aufeinanderfolgenden Gewindegängen 54 liegende Außenflächen 64 aufweisen, die bezogen auf die Grundflächen 62 der Gewindegänge 54 mit einem um eine Tiefe der Gewindegänge 54 vergrößerten Radius um die Mittelachse 60 verlaufen.

Insbesondere verlaufen die Gewindebereiche 52a, b und die gewindefreien Bereiche 56a, 56b sich abwechselnd streifenförmig in der Längsrichtung L mit jeweils einer konstanten Ausdehnung über die Winkelbereiche WGS bzw. WGF in Umfangsrichtung U um die Mittelachse 60, so dass durch die Außenflächen 58 der gewindefreien Bereiche 56a, b die umlaufenden Gewindegangsegmente 54a, 54b unterbrochen sind.

Wie ferner in Fig. 9 bis Fig. 11 erkennbar, sind die Gewindegangsegmente 54a, 54b der Gewindebereiche 52a, 52b an einem ersten Ende 53 zum an diesen angrenzenden gewindefreien Bereich 56b, 56a verschlossen und nur einem zweiten Ende 55 zum an diesen angrenzenden gewindefreien Bereich 56a, 56b hin offen.

Hierzu sind die Gewindegangsegmente 54a, 54b an dem ersten Ende im Abstand von dem gewindefreien Bereich 56b, 56a durch einen sich über die Grundfläche 62 bis zur Außenfläche 64 erhebende Abschlusswand 66 begrenzt, während die Gewindegangsegmente 54a, b am zweiten Ende 55 mit deren Grundflächen 62 in die Außenflächen 58 des jeweiligen gewindefreien Bereichs 56a, 56b übergehen.

Vorzugsweise erstrecken sich die Gewindegangsegmente 54a, 54b in der Umfangsrichtung U um die Mittelachse 60 über einem Winkelbereich WGS, welcher ungefähr dem Zweifachen des Winkelbereichs WGF entspricht, über welchen sich die gewindefreien Bereiche 56a, 56b erstrecken.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Stange
- 2: Rohr
- 3: Arretiereinrichtung
- 4: Hülse
- 5: Druckelement
- 6: Ausnehmung
- 7: zweiter Bereich
- 8: Gewindesegment
- 9: Außengewinde
- 10: erster Bereich
- 11: Übergangsbereich
- 12: Arretierelement
- 13: Öffnung (Hülse)
- 14: Öffnung (Rohr)
- 15: Sicherheitselement
- 16: längliche Öffnung
- 17: Betätigungseinrichtung
- 18: Dichteinrichtung
- 100: Hydranten
- 112: Bodenfläche
- 114: Oberteil
- 116: Anschluss
- 118: Betätigung
- 22: Unterteil
- 24: Anschluss
- 26: Zulaufrohr
- 32: Bogenkörper
- 34: Ventilgehäuse
- 40: Steigrohranordnung
- 42: Steigrohrmantel
- 44: Steigrohr
- 46: Montageflansch
- 50: Außenumfangsseiten
- 54: Gewindegangsegmente
- 52a, 52b: Gewindebereiche
- 53: erstes Ende
- 54a, 54b: Gewindegangsegmente
- 56a, 56b: gewindefreie Bereiche
- 58: Außenfläche
- 60: Mittelachse
- 62: Grundfläche
- 64: Außenfläche
- 66: Abschlusswand

## Patentansprüche

1. Hydrantengestänge zur Betätigung der Dichteinrichtung (18) eines Hydranten (100), mit einem Rohr (2) und einer teilweise in dem Rohr (2) angeordneten und gegenüber dem Rohr (2) verschiebbaren Stange (1), wobei eine Arretiereinrichtung (3) angeordnet ist, über welche die Stange (1) form- und/oder kraftschlüssig gegenüber dem Rohr (2) in einer gewünschten Position festlegbar ist, wobei die Arretiereinrichtung (3) eine Hülse (4) und ein oder mehrere Druckelemente (5) aufweist, wobei das mindestens eine Druckelement (5) in einer Ausnehmung (6) des Rohres (2) angeordnet ist und von der Hülse (4) umgeben ist, und wobei die Hülse (4) in einem nicht-arretierten Zustand in Längsrichtung gegenüber dem Rohr (2) bewegbar ist.

2. Hydrantengestänge nach Anspruch 1, **dadurch gekennzeichnet, dass** die Hülse (4) in einem ersten Bereich (10) einen ersten Innendurchmesser aufweist, der ausreichend groß ist, dass das mindestens eine Druckelement (5) nicht mit der Stange (1) in Eingriff gebracht ist, so dass die Stange (1) gegenüber dem Rohr (2) verschiebbar ist.

3. Hydrantengestänge nach Anspruch 1 oder 2, **dadurch gekennzeichnet, dass** die Hülse (4) in einem zweiten Bereich (7) einen zweiten Innendurchmesser aufweist, so dass das mindestens eine Druckelement (5) gegen die Stange (1) gedrückt wird, um die Stange (1) mit dem Rohr (2) zu arretieren.

4. Hydrantengestänge einem der Ansprüche 1 bis 3, **dadurch gekennzeichnet, dass** in einem zwischen einem ersten Bereich (10) und einem zweiten Bereich (7) ausgebildeten Übergangsbereich (11) der Innendurchmesser in Längsrichtung der Hülse (4) gesehen, vorzugsweise linear, von einem ersten Innendurchmesser bis zu einem zweiten Innendurchmesser abnimmt.

5. Hydrantengestänge nach einem der Ansprüche 1 bis 4, **dadurch gekennzeichnet, dass** das mindestens eine Druckelement (5) als Rohrsegment ausgebildet ist.

6. Hydrantengestänge nach einem der Ansprüche 1 bis 5, **dadurch gekennzeichnet, dass** an einer der Stange (1) zugewandten Fläche des mindestens einen Druckelements (5) wenigstens ein Gewindesegment (8) angeordnet ist, das komplementär zu einem Außengewinde (9) der Stange (1) ausgebildet ist.

7. Hydrantengestänge einem der Ansprüche 1 bis 6, **dadurch gekennzeichnet, dass** sich ein Außendurchmesser des mindestens einen Druckelements (5) zu einem freien Ende hin verjüngt.

8. Hydrantengestänge nach einem der Ansprüche 1 bis 7, **dadurch gekennzeichnet, dass** ein Sicherheitselement (15), beispielsweise eine Schraube oder ein Bolzen, an der Hülse (4) ausgebildet oder angeordnet ist und radial in eine längliche Öffnung (16) des Rohres (2) eingreift.

9. Hydrantengestänge nach einem der Ansprüche 1 bis 8, **dadurch gekennzeichnet, dass** ein Arretierelement (12) an der Hülse (4) ausgebildet ist, das in einer Arretierposition der Hülse (4) in eine Öffnung (14) des Rohres (2) eingreift.

10. Hydrantengestänge nach einem der Ansprüche 1 bis 9, **dadurch gekennzeichnet, dass** an einem freien Ende des Rohres (2) eine Dichteinrichtung (18) angeordnet ist.

11. Hydrantengestänge nach einem der Ansprüche 1 bis 10, **dadurch gekennzeichnet, dass** an einem freien Ende der Stange (1) eine Betätigungseinrichtung (17) angeordnet ist.

12. Hydrant (100), insbesondere längenverstellbarer Hydrant (100), mit einem Hydrantengestänge nach einem der Ansprüche 1 bis 11.

13. Verfahren zur Längeneinstellung eines Hydrantengestänges nach einem der Ansprüche 1 bis 11, wobei ein Rohr (2) und eine teilweise in dem Rohr (2) angeordnete Stange (1) derart gegeneinander verschoben werden, dass das Hydrantengestänge die notwendige Länge aufweist, und die Stange (1) gegenüber dem Rohr (2) mit einer Arretiereinrichtung (3) form- und/oder kraftschlüssig festgelegt wird.

## Claims

1. A hydrant rod for actuating the sealing device (18) of a hydrant (100), comprising a tube (2) and a bar (1) that is arranged partially in the tube (2) and is displaceable relative to the tube (2), wherein a locking device (3) is arranged by means of which the bar (1) can be fixed in a desired position relative to the tube (2) in an interlocking and/or force-fitting manner, wherein the locking device (3) comprises a sleeve (4) and one or more pressure elements (5), wherein the at least one pressure element (5) is arranged in a recess (6) in the tube (2) and is surrounded by the sleeve (4), and wherein the sleeve (4) is movable relative to the tube (2) in the longitudinal direction in a non-locked state.

2. The hydrant rod according to claim 1, **characterized in that** in a first region (10), the sleeve (4) has a first internal diameter which is large enough that the at least one pressure element (5) is not in engagement with the bar (1), such that the bar (1) is displaceable relative to the tube (2).

3. The hydrant rod according to claim 1 or 2, **characterized in that** in a second region (7), the sleeve (4) has a second internal diameter such that the at least one pressure element (5) is pressed against the bar (1) in order to lock the bar (1) to the tube (2).

4. The hydrant rod according to any of claims 1 to 3, **characterized in that** in a transition region (11) formed between a first region (10) and a second region (7), the internal diameter decreases, preferably linearly, from a first internal diameter to a second internal diameter, when viewed in the longitudinal direction (4) of the sleeve.

5. The hydrant rod according to any of claims 1 to 4, **characterized in that** the at least one pressure element (5) is configured as a tube segment.

6. The hydrant rod according to any of claims 1 to 5, **characterized in that** at least one threaded segment (8), which is configured to be complementary to an outer thread (9) of the bar (1), is arranged on a surface of the at least one pressure element (5) facing the bar (1).

7. The hydrant rod according to any of claims 1 to 6, **characterized in that** an external diameter of the at least one pressure element (5) tapers toward a free end.

8. The hydrant rod according to any of claims 1 to 7, **characterized in that** a safety element (15), for example a screw or a bolt, is formed or arranged on the sleeve (4) and engages radially in an elongate opening (16) in the tube (2).

9. The hydrant rod according to any of claims 1 to 8, **characterized in that** a locking element (12) is formed on the sleeve (4) and engages in an opening (14) in the tube (2) in a locking position of the sleeve (4).

10. The hydrant rod according to any of claims 1 to 9, **characterized in that** a sealing device (18) is arranged on a free end of the tube (2).

11. The hydrant rod according to any of claims 1 to 10, **characterized in that** an actuating device (17) is arranged on a free end of the bar (1).

12. A hydrant (100), in particular a length-adjustable hydrant (100), comprising a hydrant rod according to any of claims 1 to 11.

13. A method for setting the length of a hydrant rod according to any of claims 1 to 11, wherein a tube (2) and a bar (1) partially arranged in the tube (2) are displaced relative to one another such that the hydrant rod has the required length, and the bar (1) is fixed in an interlocking and/or force-fitting manner relative to the tube (2) by a locking device (3).

## Revendications

1. Tige de bouche d'incendie destinée à actionner le dispositif d'étanchéité (18) d'une bouche d'incendie (100), comprenant un tube (2) et une tige (1) disposée partiellement dans le tube (2) et mobile en translation par rapport à celui-ci, un dispositif de blocage (3) étant prévu, au moyen duquel la tige (1) peut être immobilisée par complémentarité de forme et/ou par adhérence par rapport au tube (2) dans une position souhaitée, le dispositif de blocage (3) comprenant un manchon (4) et un ou plusieurs éléments de pression (5), l'au moins un élément de pression (5) étant disposé dans un évidement (6) du tube (2) et entouré par le manchon (4), le manchon (4) étant mobile, à l'état débloqué, dans la direction longitudinale par rapport au tube (2).

2. Tige de bouche d'incendie selon la revendication 1, **caractérisée en ce que** le manchon (4) présente, dans une première zone (10), un premier diamètre intérieur suffisamment grand pour que l'au moins un élément de pression (5) ne soit pas en prise avec la tige (1), de sorte que la tige (1) puisse coulisser par rapport au tube (2).

3. Tige de bouche d'incendie selon la revendication 1 ou 2, **caractérisée en ce que** le manchon (4) présente, dans une deuxième zone (7), un deuxième diamètre intérieur, de sorte que l'au moins un élément de pression (5) soit pressé contre la tige (1) afin d'immobiliser la tige (1) par rapport au tube (2).

4. Tige de bouche d'incendie selon l'une des revendications 1 à 3, **caractérisée en ce que**, dans une zone de transition (11) formée entre une première zone (10) et une deuxième zone (7), le diamètre intérieur diminue, vu dans la direction longitudinale du manchon (4), de préférence de manière linéaire, d'un premier diamètre intérieur à un deuxième diamètre intérieur.

5. Tige de bouche d'incendie selon l'une des revendications 1 à 4, **caractérisée en ce que** l'au moins un élément de pression (5) est réalisé sous la forme d'un segment de tube.

6. Tige de bouche d'incendie selon l'une des revendications 1 à 5, **caractérisée en ce que**, sur une face de l'au moins un élément de pression (5) tournée vers la tige (1), est disposé au moins un segment fileté (8) complémentaire d'un filetage extérieur (9) de la tige (1).

7. Tige de bouche d'incendie selon l'une des revendications 1 à 6, **caractérisée en ce que** le diamètre extérieur de l'au moins un élément de pression (5) diminue en direction d'une extrémité libre.

8. Tige de bouche d'incendie selon l'une des revendications 1 à 7, **caractérisée en ce qu'**un élément de sécurité (15), par exemple une vis ou un boulon, est formé ou disposé sur le manchon (4) et s'engage radialement dans une ouverture allongée (16) du tube (2).

9. Tige de bouche d'incendie selon l'une des revendications 1 à 8, **caractérisée en ce qu'**un élément de blocage (12) est formé sur le manchon (4), lequel, lorsque le manchon (4) est en position de blocage, s'engage dans une ouverture (14) du tube (2).

10. Tige de bouche d'incendie selon l'une des revendications 1 à 9, **caractérisée en ce qu'**un dispositif d'étanchéité (18) est disposé à une extrémité libre du tube (2).

11. Tige de bouche d'incendie selon l'une des revendications 1 à 10, **caractérisée en ce qu'**un dispositif d'actionnement (17) est disposé à une extrémité libre de la tige (1).

12. Bouche d'incendie (100), en particulier bouche d'incendie à longueur réglable (100), comportant une tige de bouche d'incendie selon l'une des revendications 1 à 11.

13. Procédé de réglage de la longueur d'une tige de bouche d'incendie selon l'une des revendications 1 à 11, dans lequel un tube (2) et une tige (1) disposée partiellement dans le tube (2) sont déplacés l'un par rapport à l'autre de telle sorte que la tige de bouche d'incendie présente la longueur requise, puis la tige (1) est immobilisée par rapport au tube (2) au moyen d'un dispositif de blocage (3) par complémentarité de forme et/ou par adhérence.
